# EUROPEAN PATENT APPLICATION

(11) **EP 4 020 196 A1**
(43) Date of publication of application: **29.06.2022**
(21) Application number: 20858599.2
(22) Date of filing: 21.08.2020
(51) Int. Cl.: G06F 9/451

(54) **METHOD FOR MULTIPLE DISPLAYS TO ACCESS CLOUD DESKTOP, SYSTEM, CLOUD DESKTOP CLIENT AND CLOUD DESKTOP SERVER**

(30) Priority: 23.08.2019 CN 201910785789
(71) Applicant: ZTE Corporation, Shenzhen, Guangdong 518057 (CN)
(72) Inventor: ZHANG, Ning, Shenzhen, Guangdong 518057 (CN); WANG, Changzheng, Shenzhen, Guangdong 518057 (CN); KONG, Peng, Shenzhen, Guangdong 518057 (CN); CAO, Ying, Shenzhen, Guangdong 518057 (CN)
(74) Representative: Studio Torta S.p.A.
(86) International application number: PCT/CN2020/110564
(87) International publication number: WO 2021/036940

(57) **Abstract**

Disclosed in the embodiments of the present application are a method for multiple displays to access a cloud desktop and related equipment. The method comprises: a cloud desktop client acquires parameter information of all displays connected to a terminal, on which the cloud desktop client is located; and the cloud desktop client sends the parameter information to the cloud desktop server so that the cloud desktop server sets display parameters of the cloud desktop according to the parameter information.

## Description

This application claims the priority of Chinese patent application No. 201910785789.9 and filed with the China National Intellectual Property Administration on August 23, 2019, the entirety of which is incorporated herein by reference.

### Field of the Invention

The present application relates to, but is not limited to, cloud desktop technologies, for example, a method for multiple displays to access a cloud desktop, a system for multiple displays to access a cloud desktop, a cloud desktop client, and a cloud desktop server.

### Background of the Invention

With the popularization of technologies such as cloud computing and virtual desktop, the cloud desktop is applied in more and more fields and scenes, and it is required to transmit a great deal of remote data to a user terminal via a network as quickly and clearly as possible for display. In face of more and more display content, there are increasing and more urgent requirements and needs to use multiple display screens to access the cloud desktop. For example, in a scene of using the cloud desktop to process financial work, verification of multiple electronic reports requires accessing of multiple screens to display as much entry content as possible, so that collating may be performed back and forth to meet the requirement of high work efficiency. For such a scene, accessing of multiple display screens, rather than a single high-resolution display, is usually expected. In a scene of rail transit management and control, operation of the management software requires accessing of up to four display screens, so as to better display a software running diagram.

In the industry, after multiple displays access to a cloud desktop virtual machine, a user would face an operation scene where a screen layout needs to be adjusted again and logging-in is required again to connect to the virtual machine, and parameters to be configured and adjusted include a resolution of the display, a layout position, a display density (a ratio for enlarging and reducing words) of DPI (dots per inch), and so on. One method of adjusting the screen is that a position of the display screen is adjusted at the side of an operation system a terminal and then the display screen accesses the cloud desktop virtual machine; another method is that the display screen accesses the cloud desktop virtual machine and then the position of the display screen is adjusted at the side of a system of the virtual machine; and yet another method is that the position of the display screen is physically moved and then the display screen accesses the cloud desktop virtual machine.

Accordingly, a main idea in relevant operation methods is basically to use the operation system to configure and adjust the display screen so as to manage the display screen, which requires multiple times of manual identification and sorting to achieve a desired screen layout and a desired effect. The complexity of performing adjustment and correction would increase when a terminal accessing system is different from a guest operating system of the virtual machine or system versions are different, which is a relatively great challenge to a user who is not familiar with relevant knowledge.

### Summary of the Invention

An embodiment of the application provides a method for multiple displays to access a cloud desktop, including:
acquiring, by a cloud desktop client, parameter information of all displays connected to a terminal, on which the cloud desktop client is located; and
sending, by the cloud desktop client, the parameter information to a cloud desktop server, so that the cloud desktop server sets display parameters of the cloud desktop according to the parameter information.

An embodiment of the application further provides a method for multiple displays to access a cloud desktop, including:
receiving, by a cloud desktop server, parameter information of all displays connected to a terminal, on which a cloud desktop client is located, sent by the cloud desktop client; and
setting, by the cloud desktop server, display parameters of a cloud desktop according to the parameter information.

An embodiment of the application further provides a cloud desktop client, including:
a screen information collecting module, which is configured to acquire parameter information of all displays connected to a terminal, on which the cloud desktop client is located; and
an information sending module, which is configured to send the parameter information to a cloud desktop server, so that the cloud desktop server sets display parameters of a cloud desktop according to the parameter information.

An embodiment of the application further provides a cloud desktop server, including:
an information receiving module, which is configured to receive parameter information of all displays connected to a terminal, on which a cloud desktop client is located, sent by the cloud desktop client; and
a screen setting module, which is configured to set display parameters of a cloud desktop according to the parameter information.

An embodiment of the application further provides a system for multiple displays to access a cloud desktop, including:
a cloud desktop client, which is configured to acquire parameter information of all displays connected to a terminal, on which the cloud desktop client is located, and send the parameter information to a cloud desktop server; and
a cloud desktop server, which is configured to receive the parameter information of all displays connected to the terminal, on which the cloud desktop client is located, sent by the cloud desktop client and set display parameters of the cloud desktop according to the parameter information.

### Brief Description of the Drawings

Accompanying drawings are used to provide understanding of technical solutions of the application, constitute a part of the description, are used to explain the technical solutions of the application in conjunction with embodiments of the application, and do not constitute a limitation on the technical solutions of the application.
Fig. 1 schematically shows a flowchart of a method for multiple displays to access a cloud desktop according to an embodiment of the application;
Fig. 2 schematically shows a flowchart of a method for multiple displays to access a cloud desktop according to another embodiment of the application;
Fig. 3 schematically shows a structure of a cloud desktop client according to an embodiment of the application;
Fig. 4 schematically shows a structure of a cloud desktop server according to an embodiment of the application;
Fig. 5 schematically shows a flowchart of a method for multiple displays to access a cloud desktop according to another embodiment of the application;
Fig. 6 schematically shows a structure of a system for multiple displays to access a cloud desktop according to an embodiment of the application;
Fig. 7 schematically shows a structure of a system for multiple displays to access a cloud desktop according to another embodiment of the application;
Fig. 8 schematically shows a flowchart of a method for multiple displays to access a cloud desktop according to another embodiment of the application;
Fig. 9 schematically shows a structure of a system for multiple displays to access a cloud desktop according to another embodiment of the application; and
Fig. 10 schematically shows a flowchart of a method for multiple displays to access a cloud desktop according to another embodiment of the application.

### Detailed Description of the Embodiments

Embodiments of the disclosure will be described below with reference to the accompanying drawings.

Steps illustrated in a flowchart of the accompanying drawings may be executed in a computer system, such as a group of computer executable instructions. Moreover, although a logic sequence is illustrated in the flowchart, in some cases, steps illustrated or described may be executed in a sequence different from the logic sequence herein.

Relevant technologies have not revealed a simple, convenient, and quick method for multiple displays of a same terminal to access a cloud desktop. In a scene where an operation system of the terminal is inconsistent with an operation system of a virtual machine, for example, the operation system of the terminal being Windows 10 while the operation system of the virtual machine being Windows 7, the operation system of the terminal being a Linux system while the operation system of the virtual machine being a Windows operation system, or the operation system of the terminal being the Windows operation system while the operation system of the virtual machine being a Linux operation system, multiple-screen usage experience of the cloud desktop, which serves as a virtual machine computer for safer and faster accessing, is not enhanced.

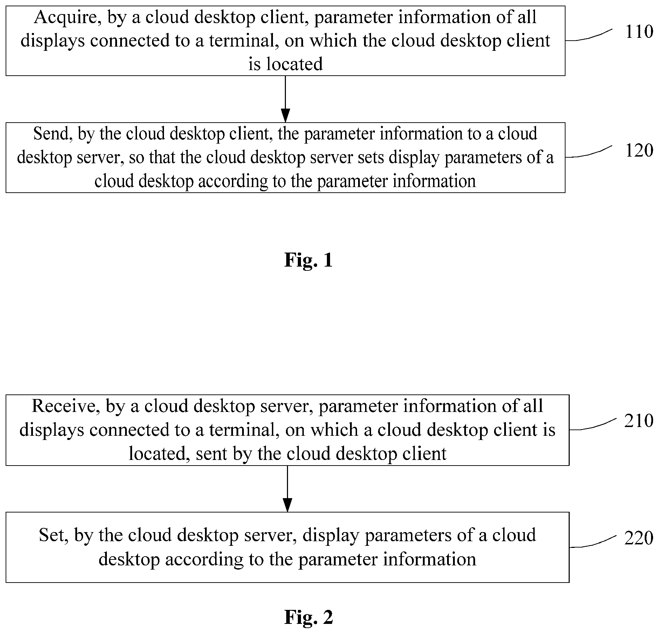

Fig. 1 schematically shows a flowchart of a method for multiple displays to access a cloud desktop according to an embodiment of the application. As shown in Fig. 1, the method includes the following steps.

At step 110, a cloud desktop client acquires parameter information of all displays connected to a terminal, on which the cloud desktop client is located.

At step 120, the cloud desktop client sends the parameter information to a cloud desktop server, so that the cloud desktop server sets display parameters of the cloud desktop according to the parameter information.

The parameter information includes at least one of a display identification, a display type, a screen resolution, a screen position coordinate, a display colour depth, and a screen display density.

Before the cloud desktop client sends the parameter information to the cloud desktop server, the method further includes: modifying the parameter information by the cloud desktop client. Sending the parameter information to the cloud desktop server includes: sending the parameter information modified to the cloud desktop server by the cloud desktop client.

Fig. 2 schematically shows a flowchart of a method for multiple displays to access a cloud desktop according to another embodiment of the application. As shown in Fig. 2, the method includes the following steps.

At step 210, a cloud desktop server receives parameter information of all displays connected to a terminal, on which a cloud desktop client is located.

At step 220, the cloud desktop server sets display parameters of the cloud desktop according to the parameter information.

The parameter information includes at least one of a display identification, a display type, a screen resolution, a screen position coordinate, a display colour depth, and a screen display density.

Setting the display parameters of the cloud desktop according to the parameter information includes: invoking a display card device in the virtual machine to set the screen resolution of each of the multiple displays; and invoking a port of an operation system in the virtual machine to set the screen position coordinate, the display colour depth, and the screen display density of each of the multiple displays.

According to a technical solution provided in the embodiment, in a scene of multiple displays accessing a cloud desktop, it is not required to manually adjust screen display of the cloud desktop, and the multiple displays can access the cloud desktop in a convenient and fast manner.

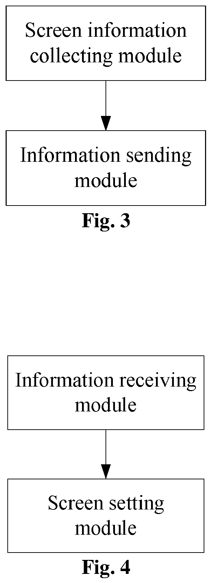

Fig. 3 schematically shows a structure of a cloud desktop client according to an embodiment of the application. As shown in Fig. 3, the cloud desktop client includes the following modules.

A screen information collecting module is configured to acquire parameter information of all displays connected to a terminal, on which the cloud desktop client is located. An information sending module is configured to send the parameter information to a cloud desktop server, so that the cloud desktop server sets display parameters of a cloud desktop according to the parameter information.

The parameter information includes at least one of a display identification, a display type, a screen resolution, a screen position coordinate, a display colour depth, and a screen display density.

The cloud desktop client further includes: a screen information configuring module, which is configured to modify the parameter information before the parameter information is sent to the cloud desktop server; and an information sending module, which is configured to send the parameter information modified to the cloud desktop server.

Fig. 4 schematically shows a structure of a cloud desktop server according to an embodiment of the application. As shown in Fig. 4, the cloud desktop server includes the following modules.

An information receiving module is configured to receive parameter information of all displays connected to a terminal, on which a cloud desktop client is located, sent by the cloud desktop client. A screen setting module is configured to set display parameters of a cloud desktop according to the parameter information.

The parameter information includes at least one of a display identification, a display type, a screen resolution, a screen position coordinate, a display colour depth, and a screen display density.

The screen setting module is configured to invoke a display card device in a virtual machine to set the screen resolution of each of the multiple displays, and invoke a port of an operation system in the virtual machine to set the screen position coordinate, the display colour depth, and the screen display density of each of the multiple displays.

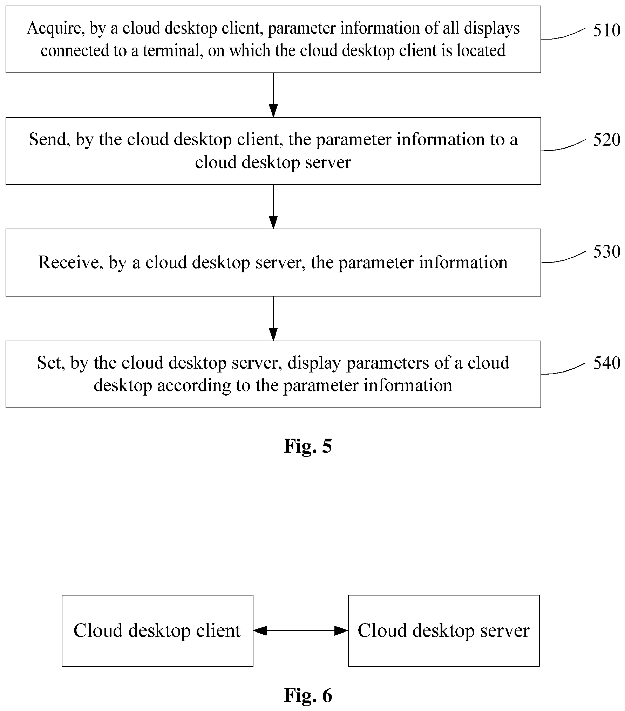

Fig. 5 schematically shows a flowchart of a method for multiple displays to access a cloud desktop according to another embodiment of the application. As shown in Fig. 5, the method includes the following steps.

At step 510, a cloud desktop client acquires parameter information of all displays connected to a terminal, on which the cloud desktop client is located.

When the cloud desktop client is started up, the cloud desktop client may detect all displays connected to the terminal, and interact with a display card driver of the terminal by a method such as invoking a port provided by an operation system so as to periodically acquire current initialization parameter information of the multiple displays in the operation system, the initialization parameter information including: a resolution of a current screen, a layout position coordinate, a scaled size of words on the screen (a display density of DPI), a colour depth of the screen.

Alternatively, a screen information collecting module and an information sending module may be provided at the cloud desktop client.

The screen information collecting module mainly functions to collect parameter information of all displays connected to the terminal when cloud desktop accessing the client is started up, and the parameter information includes the number of current displays, the resolution set, the colour depth supported and set, the layout position coordinate, the display density of DPI, and so on.

The screen information collecting module sorts out the parameter information collected, which includes invoking an operation system port function to allocate an identification number for each of the displays and calculating relative positions and sizes of the displays according to layout position coordinates of the displays, and packs the above parameter information collected and sorted out into a package structure for the information sending module to read. The package structure includes information such as a display identification, a display type, a resolution of the display, a screen position coordinate, a display colour depth, a screen display density. The display identification is used to distinguish different displays. The display type includes a primary display, an auxiliary display, and so on, and the display type may be determined according to information such as the position of the display or assigned by a user.

At step 520, the cloud desktop client sends the parameter information to a cloud desktop server.

Alternatively, the information sending module mainly functions to send the parameter information collected from the terminal to a virtual machine. The sending module may perform transmission via a cloud desktop protocol channel, and may also perform transmission via other network channels to inside of the virtual machine. For example, the sending module may use a link of the cloud desktop protocol channel, and may also uses a link of a transmission control protocol (TCP)/a user datagram protocol (UDP), to send configuration data to an information receiving module. If the link of the cloud desktop protocol channel is used for transmission, a message number of an extension protocol is usually needed.

At step 530, the cloud desktop server receives the parameter information.

Alternatively, an information receiving module and a screen setting module may be provided at the cloud desktop server.

The information receiving module mainly functions to receive, in the virtual machine, the parameter information of the displays at the terminal transmitted from the information sending module.

Similar to the manner of sending information by the information sending module, the information receiving module may perform transmission via the cloud desktop protocol channel, and may also perform transmission via other network channels to the inside of the virtual machine. For example, the parameter information sent by the cloud desktop client may be received via the link of the cloud desktop protocol channel or via the link of the TCP/UDP. If the parameter information is received via the link of the cloud desktop protocol channel, a message number that is the same as a message number of an extension protocol of the information sending module is usually needed for matching and identifying, so as to deliver the parameter information to the screen setting module and enable, by notifying or invoking, the screen setting module to perform setting.

At 540, the cloud desktop server sets display parameters of the cloud desktop according to the parameter information.

Alternatively, the screen setting module needs to have a capability of communicating with a display card driver of the virtual machine. The screen setting module mainly functions to initiate a screen extension and set attribute configurations of a screen in the virtual machine according to the parameter information of all displays collected by the cloud desktop client by invoking a function port provided by the operation system according to the parameter information received by the information receiving module, and enables the configurations to be active immediately. For example, the screen setting module resolves the parameter information received, verifies the number of surfaces of a screen of the virtual machine according to the information about the number of the displays therein, and notifies the display card driver of increasing a display mode corresponding to a resolution and a colour depth via a data port between the screen setting module and the display card driver according to the resolution and the colour depth of the screen of a corresponding surface; the screen setting module notifies the operation system of setting a corresponding display density via a port of the operation system; and the screen setting module sets a relative position layout of the screen by invoking the port of the operation system.

The solution provided in the embodiment enables displays to access a cloud desktop virtual machine in a layout which best meets expectations of a user with configuration parameters being closest to those recommended for the displays, so that the user can connect multiple display screens to a cloud desktop in a fastest and simplest manner.

Another embodiment of the application differs from the above embodiment in that, before the cloud desktop client sends the parameter information to the cloud desktop server, the method further includes modifying the parameter information by the cloud desktop client. Alternatively, a screen information configuring module may be provided at the cloud desktop client, and the screen information configuring module mainly functions to support the user to modify the parameter information of one or some display screens by this screen information configuring module. Further, the process of modifying the parameter information of the display screens by the user includes performing customized modifications on configuration information such as a screen layout position, a resolution, and a display density by using a template premade by a client interface according to the information collected, for example, screens being arranged in rows or columns or in a clockwise or anticlockwise direction, or by operations such as manually dragging. The cloud desktop client sending the parameter information to the cloud desktop server includes: sending the parameter information modified to the cloud desktop server by the cloud desktop client. Then, the cloud desktop server sets the display parameters of the cloud desktop according to the modified parameter information received.

Fig. 6 schematically shows a structure of a system for multiple displays to access a cloud desktop according to an embodiment of the application. As shown in Fig. 6, the system includes the following client and server.

A cloud desktop client is configured to acquire parameter information of all displays connected to a terminal, on which the cloud desktop client is located, and send the parameter information to a cloud desktop server. The cloud desktop server, which is configured to receive the parameter information of all displays connected to the terminal, on which the cloud desktop client is located, sent by the cloud desktop client and set display parameters of the cloud desktop according to the parameter information.

The cloud desktop server includes: a server, a virtual machine agent, and a screen setting module. The server is configured to receive the parameter information of all displays connected to the terminal, on which the cloud desktop client is located, sent by the cloud desktop client and forward the parameter information to the virtual machine agent for saving. The screen setting module is configured to set the display parameters of the cloud desktop according to the parameter information saved by the virtual machine agent.

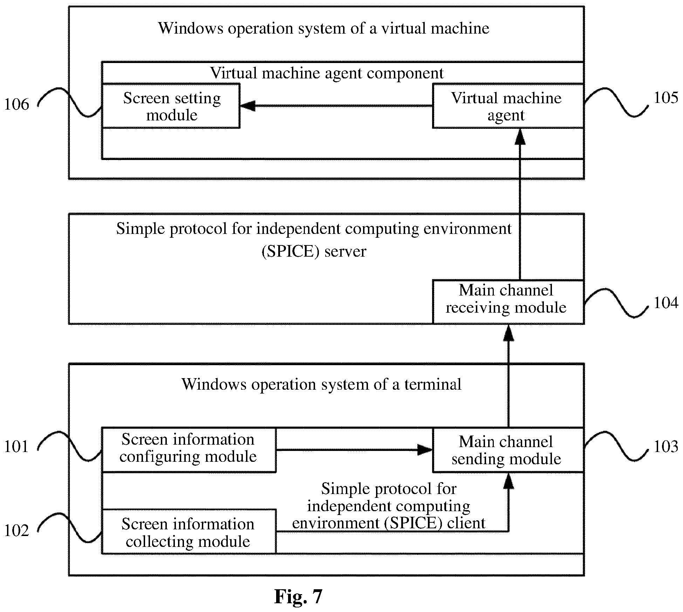

As shown in Fig. 7, another embodiment of the application is applied to a cloud desktop system based on an open simple protocol for independent computing environment (SPICE). An operation system of a terminal is Windows 10, and an operation system of a virtual machine is Windows 7. The virtual machine is equipped with four QXL display cards to support four-screen display. The system includes the following modules.

A screen information collecting module 102 is in a SPICE client in the form of a performance function or an independent thread. A screen information configuring module 101 is also located in the SPICE client.

Alternatively, a screen configuring menu interface may be added to a menu bar of the SPICE client, and a template displayed according to screen layout initialization of the terminal may be checked and modified in the interface. The performance function or the independent thread is in a control layer of the client to cooperate operations in the interface. The above menu bar, a template modifying interface, and the function in the control layer serve as the screen information configuring module of the system.

A main channel sending module 103 is a control information transmission channel of the SPICE protocol, which is suitable for transmission of initialization information and configuration information at a relative low communication frequency.

Alternatively, in the embodiment, a sending port of a SPICE main channel of the client may be used as the main channel sending module, which may also be called an information sending module.

A main channel receiving module 104 is located in a SPICE server.

Alternatively, in the embodiment, a receiving port of a SPICE main channel of the server may be used as the main channel receiving module, which may also be called an information receiving module.

A virtual machine agent 105 and a screen setting module 106 are in virtual machine agent components in the form of the performance function and the independent thread.

The screen setting module 106 may also be disposed independent of the virtual machine agent components.

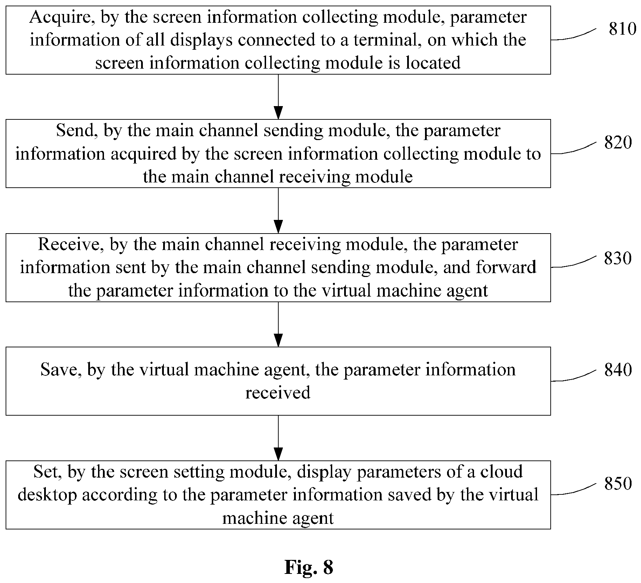

Based on the system shown in Fig. 7, Fig. 8 schematically shows a flowchart of a method for multiple displays to access a cloud desktop according to the embodiment. As shown in Fig. 8, the method includes the following steps.

At step 810, the screen information collecting module 102 acquires parameter information of all displays connected to a terminal, on which the screen information collecting module is located.

The parameter information includes at least one of a display identification, a display type, a screen resolution, a screen position coordinate, a display colour depth, and a screen display density.

Alternatively, after the SPICE client is started up, a method of adding new members of applications of the client, i.e., init_monitors, is invoked. In this function, a method of Enum Display Devices in the Microsoft software development kit (Microsoft SDK) is invoked to acquire parameter information of all displays found throughout a terminal system, and the parameter information is packed and stored in a link list. Structure members packed include an identification number of a display, whether the display being a primary screen, a current screen resolution of the display, a layout position coordinate, a colour depth, and so on. Besides, in this function, a pixel density is acquired by invoking a method of Get Device Caps and using an input parameter LOGPIXELSX. Then, a DPI display density is converted by using a formula, i.e., DPI=pixel density^{∗} 100/96, and a converted DPI display density is put in the above packed members.

At step 820, the main channel sending module 103 sends the parameter information acquired by the screen information collecting module 102 to the main channel receiving module 104.

Alternatively, the SPICE client initializes a main channel during a start-up process, and after establishing a network connection with a main channel of a SPICE server, the SPICE client sends out link-list data saved at step 810 by a newly added SPICE protocol message, i.e., SPICE_MSGC_MAIN_AGENT_DATA. In a message body, it is indicated again, by a sub-message, that a receiver is VD_AGENT_PROTOCOL, and it is indicated that a final receiver of the message is the virtual machine agent. Examples of members of the message body are listed as follows, where a message number is VD_AGENT_MONITORS_CONFIG.

| typedef struct SPICE_ATTR_PACKED VDAgentMonConfig { | | |
|---|---|---|
| | int height; | //resolution height |
| | int width; | //resolution width |
| | int bpp; | //display colour depth |
| | int x; | //x-axis coordinate of a screen |
| | int y; | //y-axis coordinate of the screen |
| | Int dpi; | //display density of the screen |
| } VDAgentMonConfig; | | |

At step 830, the main channel receiving module 104 receives the parameter information sent by the main channel sending module 103, and forwards the parameter information to the virtual machine agent 105.

Alternatively, after establishing the network connection with the main channel of the client, the SPICE server receives the message SPICE_MSGC_MAIN_AGENT_DATA, identifies that the final receiver of the message is the virtual machine agent after unwrapping a head of the SPICE message, and then forwards the message to the virtual machine agent.

At step 840, the virtual machine agent 105 saves the parameter information received.

Alternatively, the virtual machine agent components receives an extension message VD_AGENT_MONITORS_CONFIG forwarded by the SPICE server, and parses the extension message into a link list at virtual machine components for saving.

At step 850, the screen setting module 106 sets display parameters of the cloud desktop according to the parameter information saved by the virtual machine agent 105.

Alternatively, the screen setting module 106 sets and modifies screen configurations by a method handle_mode_config. In this function, DRV_ESC_USER_CODE is sent to the display card driver by invoking a function port Ext Escape of Microsoft SDK, and the code is a communication code customized by consultation of the virtual machine components and the display card driver. The message carries screen parameter information of all screen surfaces. Further, a registry entry HKCU\Control Panel\Desktop\LogPixels of the operation system is set as a value of the DPI display density saved in the link list. Besides, the screen setting module 106 invokes a function port Change Display Settings Ex of Microsoft SDK and uses configuration parameters, such as the screen position, in the link list to enable the screen resolution newly written to the display card driver and an informed configuration layout position of the operation system of the virtual machine to be active immediately.

Another embodiment of the application is also based on the system illustrated in Fig. 7, and differs from the previous embodiment in the following aspects. Before step 820, the screen information configuring module 101 modifies the parameter information acquired by the screen information collecting module 102, and then the main channel sending module 103 sends the parameter information modified by the screen information configuring module 101 to the main channel receiving module 104. In the following steps, the screen setting module 106 sets the display parameters of the cloud desktop according to the parameter information modified, which is similar to step 830 to step 850. Details will not be repeated.

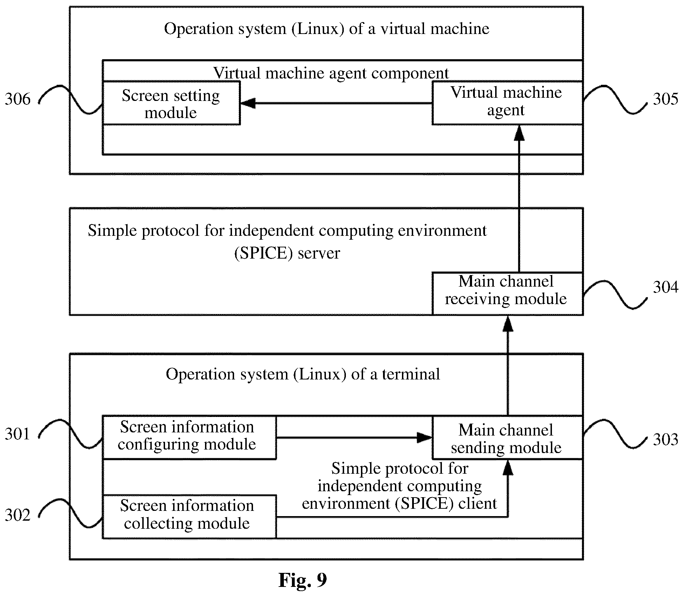

As shown in Fig. 9, another embodiment of the application is applied to a cloud desktop system based on an open SPICE protocol. An operation system of a terminal is Linux, and an operation system of a virtual machine is Linux. The virtual machine is equipped with four QXL display cards to support four-screen display. The system includes the following modules.

A screen information collecting module 302 is in a SPICE client in the form of a performance function or an independent thread. A screen information configuring module 301 is also located in the SPICE client.

Alternatively, a screen configuring menu interface may be added to a menu bar of the SPICE client, and a template displayed according to screen layout initialization of the terminal may be checked and modified in the interface. The performance function or the independent thread is in a control layer of the client to cooperate operations in the interface. The above menu bar, a template modifying interface, and the function in the control layer serve as the screen information configuring module of the system.

A main channel sending module 303 is a control information transmission channel of the SPICE protocol, which is suitable for transmission of initialization information and configuration information at a relative low communication frequency.

Alternatively, in the embodiment, a sending port of a SPICE main channel of the client may be used as the main channel sending module, which may also be called an information sending module.

A main channel receiving module 304 is located in a SPICE server.

Alternatively, in the embodiment, a receiving port of a SPICE main channel of the server may be used as the main channel receiving module, which may also be called an information receiving module.

A virtual machine agent 305 and a screen setting module 306 are in virtual machine agent components in the form of the performance function and the independent thread.

The screen setting module 306 may also be disposed independent of the virtual machine agent components.

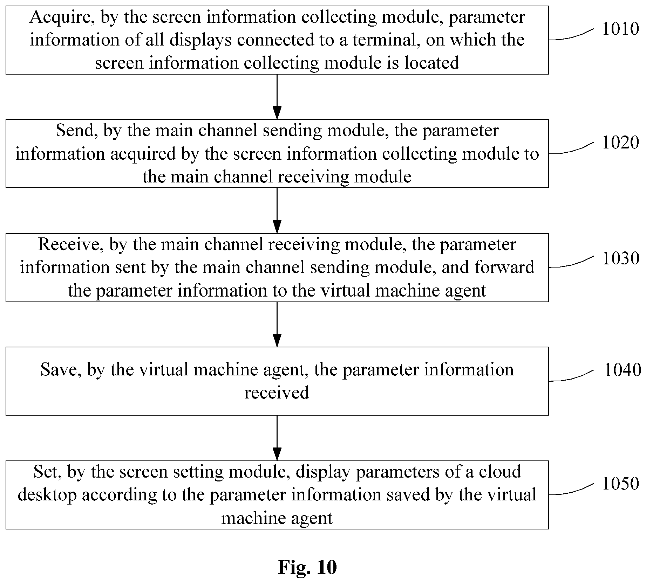

Based on the system shown in Fig. 9, Fig. 10 schematically shows a flowchart of a method for multiple displays to access a cloud desktop according to the embodiment. As shown in Fig. 10, the method includes the following steps.

At step 1010, the screen information collecting module 302 acquires parameter information of all displays connected to a terminal, on which the screen information collecting module is located.

The parameter information includes at least one of a display identification, a display type, a screen resolution, a screen position coordinate, a display colour depth, and a screen display density.

Alternatively, after the SPICE client is started up, a method of adding new members of applications of the client, i.e., init_monitors, is invoked. In this function, a method of Screen Count is invoked to acquire information of all displays found throughout a terminal system, and the information is packed and stored in a link list. Structure members packed include an identification number of a display, whether the display being a primary screen, a current screen resolution of the display, a layout position coordinate, a colour depth, and so on. Compared with Windows, Linux is relatively weak in supporting the display density of the screen. A currently practicable way is to use gnome to perform acquiring and setting. A command xdpyinfo may be used to acquire DPI, and the display density is put in the above packed members.

At step 1020, the main channel sending module 303 sends the parameter information acquired by the screen information collecting module 302 to the main channel receiving module 304.

Alternatively, the SPICE client initializes a main channel during a start-up process, and after establishing a network connection with a main channel of a SPICE server, the SPICE client sends out link-list data saved at step 1010 by a newly added SPICE protocol message, i.e., SPICE_MSGC_MAIN_AGENT_DATA. In a message body, it is indicated again, by a sub-message, that a receiver is VD_AGENT_PROTOCOL, and it is indicated that a final receiver of the message is the virtual machine agent. Examples of members of the message body are listed as follows, where a message number is VD_AGENT_MONITORS_CONFIG.

| typedef struct SPICE_ATTR_PACKED VDAgentMonConfig { | | |
|---|---|---|
| | int height; | //resolution height |
| | int width; | //resolution width |
| | int bpp; | //display colour depth |
| | int x; | //x-axis coordinate of a screen |
| | int y; | //y-axis coordinate of the screen |
| | Int dpi; | //display density of the screen |
| } VDAgentMonConfig; | | |

At step 1030, the main channel receiving module 104 receives the parameter information sent by the main channel sending module 303, and forwards the parameter information to the virtual machine agent 305.

Alternatively, after establishing the network connection with the main channel of the client, the SPICE server receives the message SPICE_MSGC_MAIN_AGENT_DATA, identifies that the final receiver of the message is the virtual machine agent after unwrapping a head of the SPICE message, and then forwards the message to the virtual machine agent.

At step 1040, the virtual machine agent 305 saves the parameter information received.

Alternatively, the virtual machine agent components receives an extension message VD_AGENT_MONITORS_CONFIG forwarded by the SPICE server, and parses the extension message into a link list at virtual machine components for saving.

At step 1050, the screen setting module 306 sets display parameters of the cloud desktop according to the parameter information saved by the virtual machine agent 305.

Alternatively, the screen setting module 306 in the virtual machine components sets and modifies screen configurations by a method handle_mode_config. In this function, a configuration document for modifying a virtual display card device in the virtual machine is invoked to set parameters such as the display resolution, and the configuration document is /etc/X11/xorg.conf. This message carries screen parameter information of all screen surfaces. Examples are listed as follows.

| | | |
|---|---|---|
| # xorg.conf generated by spice-vdagentd | | |
| # generated from monitor info provided by the client | | |
| # Client has only 1 monitor | | |
| # This works best with no xorg.conf, leaving xorg.conf empty | | |
| Section "ServerFlags" | | |
| | Option "Xinerama" "true" | |
| EndSection | | |
| Section "Device" | | |
| | Identifier "qx11" | |
| | Driver "qxl" | |
| | BusID "PCI:0:0100:0" | |
| | Option "NumHeads" "1" | |
| EndSection | | |
| Section "Screen" | | |
| | Identifier "Screen 1" | |
| | Device "qx11" | |
| | DefaultDepth 24 | |
| | SubSection "Display" | |
| | | Viewport 0 0 |
| | | Depth 24 |
| | | Modes "1440x900" |
| | EndSubSection | |
| EndSection | | |
| Section "ServerLayout" | | |
| | Identifier "layout" | |
| | Screen "Screen1" 0 0" | |
| EndSection | | |

For the virtual machine with the Linux operation system, it is required to mount a gnome desktop display component. After the component is mounted, /desktop/gnome/font_rendering/dpi of the Linux operation system is set as a DPI display density value, or a command gsettings set org.gnome.desktop.interface scaling-factor 2 is executed in a program code. The scaling-factor may only be set as an integer, 1=100%, 2=200%. After the command is executed, an overall DPI display density may be set.

Another embodiment of the application is also based on the system illustrated in Fig. 9, and differs from the previous embodiment in the following aspects. Before step 1020, the screen information configuring module 301 modifies the parameter information acquired by the screen information collecting module 302, and then the main channel sending module 303 sends the parameter information modified by the screen information configuring module 301 to the main channel receiving module 304. In the following steps, the screen setting module 306 sets the display parameters of the cloud desktop according to the parameter information modified, which is similar to steps 1030 to 1050. Details will not be repeated.

The above two embodiments enumerates implementation examples of a scene where the terminal and the virtual machine both have a Window operation system and a scene where the terminal and the virtual machine both have a Linux operation system. Without departing from the principles of the application, various modifications may be made. For example, the terminal has the Window operation system, while the virtual machine has the Linux operation system; or the terminal has the Linux operation system, while the virtual machine has the Window operation system; or the Window operation system and the Linux operation system may be combined flexibly according to the implementation example. The method is similar to the above embodiments, and details are not repeated.

A person of ordinary skills in the art may understand that, all or some steps of the method and functional modules/units of the system disclosed above may be implemented as software, firmware, hardware, and a proper combination thereof. In an embodiment of the hardware, a division of the functional modules/units mentioned in the above description does not necessarily correspond to a division of physical components. For example, one physical component may have multiple functions, or one function or step may be implemented by multiple physical components cooperatively. Some components or all components may be implemented as software executed by a processor, such as a digital signal processor or a microprocessor, or may be implemented as hardware, or may be implemented as an integrated circuit, such as an application-specific integrated circuit. Such software may be distributed on a computer readable medium. The computer readable medium may include a computer storage medium (or non-transitory medium) and a communication medium (or transitory medium). As is well known to a person of ordinary skills in the art, the term of computer storage medium may include volatile and non-volatile, removable and non-removable mediums that may be implemented in any method or technology for storing information (such as a computer readable instruction, a data structure, a program module or other data). The computer storage medium includes, but is not limited to, a random access memory (RAM), a read-only memory (ROM), an electrically erasable programmable read only memory (EEPROM), a flash memory or other memory technology, a compact disc read-only memory (CD-ROM), a digital video disk (DVD) or other optical disk storage, a magnetic cassette, a magnetic tape, a magnetic disk storage or other magnetic storage device, or any other medium which can be used to store desired information and can be accessed by a computer. Besides, it is well known to a person of ordinary skills in the art that the communication medium typically includes a computer readable instruction, a data structure, a computer program module, or other data in a modulated data signal, such as a carrier wave or other transport mechanisms, and may include any information delivery medium.

## Claims

1. A method for multiple displays to access a cloud desktop, comprising:
acquiring, by a cloud desktop client, parameter information of all displays connected to a terminal, on which the cloud desktop client is located; and
sending, by the cloud desktop client, the parameter information to a cloud desktop server, so that the cloud desktop server sets display parameters of the cloud desktop according to the parameter information.

2. The method according to claim 1, wherein the parameter information comprises at least one of a display identification, a display type, a screen resolution, a screen position coordinate, a display colour depth, and a screen display density.

3. The method according to claim 1, wherein before sending the parameter information to the cloud desktop server by the cloud desktop client, the method further comprises:
modifying the parameter information by the cloud desktop client; and
sending the parameter information to the cloud desktop server by the cloud desktop client comprises:
sending the parameter information modified to the cloud desktop server by the cloud desktop client.

4. A method for multiple displays to access a cloud desktop, comprising:
receiving, by a cloud desktop server, parameter information of all displays connected to a terminal, on which a cloud desktop client is located, sent by the cloud desktop client; and
setting, by the cloud desktop server, display parameters of the cloud desktop according to the parameter information.

5. The method according to claim 4, wherein the parameter information comprises at least one of a display identification, a display type, a screen resolution, a screen position coordinate, a display colour depth, and a screen display density.

6. The method according to claim 5, wherein setting the display parameters of the cloud desktop according to the parameter information by the cloud desktop server comprises:
invoking, by the cloud desktop server, a display card device in a virtual machine to set the screen resolution of each of the multiple displays
invoking, by the cloud desktop server, a port of an operation system in the virtual machine to set the screen position coordinate, the display colour depth, and the screen display density of each of the multiple displays.

7. A cloud desktop client, comprising:
a screen information collecting module, which is configured to acquire parameter information of all displays connected to a terminal, on which the cloud desktop client is located; and
an information sending module, which is configured to send the parameter information to a cloud desktop server, so that the cloud desktop server sets display parameters of a cloud desktop according to the parameter information.

8. The cloud desktop client according to claim 7, further comprising:
a screen information configuring module, which is configured to modify the parameter information before the parameter information is sent to the cloud desktop server; and
an information sending module, which is configured to send the parameter information modified to the cloud desktop server.

9. A cloud desktop server, comprising:
an information receiving module, which is configured to receive parameter information of all displays connected to a terminal, on which a cloud desktop client is located, sent by the cloud desktop client; and
a screen setting module, which is configured to set display parameters of a cloud desktop according to the parameter information.

10. A system for multiple displays to access a cloud desktop, comprising:
a cloud desktop client, which is configured to acquire parameter information of all displays connected to a terminal, on which the cloud desktop client is located, and send the parameter information to a cloud desktop server; and
a cloud desktop server, which is configured to receive the parameter information of all displays connected to the terminal, on which the cloud desktop client is located, sent by the cloud desktop client and set display parameters of the cloud desktop according to the parameter information.

11. The system according to claim 10, wherein
the cloud desktop server comprises a server, a virtual machine agent, and a screen setting module,
wherein the server is configured to receive the parameter information of all displays connected a terminal, on which the cloud desktop client is located, sent by the cloud desktop client and forward the parameter information to the virtual machine agent for saving; and
wherein the screen setting module is configured to set the display parameters of the cloud desktop according to the parameter information saved by the virtual machine agent.
